# EUROPEAN PATENT APPLICATION

(11) **EP 4 618 334 A1**
(43) Date of publication of application: **17.09.2025**
(21) Application number: 24163573.9
(22) Date of filing: 14.03.2024
(51) Int. Cl.: H02G 1/14, H02G 15/18

(54) **APPARATUS AND METHOD FOR DEPOSITING AN ELASTOMERIC MEMBER IN AN EXPANDED STATE ON A HOLDOUT ELEMENT**

(71) Applicant: TE Connectivity Solutions GmbH, 8200 Schaffhausen (CH)
(72) Inventor: Simonsohn, Thilo, 8200 Schaffhausen (CH); Ahrens, Heiko, 8200 Schaffhausen (CH)
(74) Representative: Grünecker Patent- und Rechtsanwälte PartG mbB

(57) **Abstract**

The present invention relates to an apparatus for depositing an elastomeric member in an expanded state on a holdout element and to a corresponding method. An apparatus for depositing an elastomeric member (102, 302, 402) in an expanded state on a holdout element (104, 304, 404) is provided, the apparatus (100, 300, 400) comprising: an expansion unit (106, 206, 306, 406, 506, 606) for radially expanding the elastomeric member (102, 302, 402), wherein the expansion unit (106, 206, 306, 406, 506, 606) is formed to receive the holdout element (104, 304, 404), so that the expanded elastomeric member (102, 302, 402) can be deposited onto the holdout element (104, 304, 404), a textile friction reduction unit (116, 216, 316), which is operable to be arranged at least partly between an outer surface of the expansion unit (106, 206, 306, 406, 506, 606) and an inner surface of the elastomeric member (102, 302, 402), wherein tensioning means are provided for axially tensioning the textile friction reduction unit (116, 216, 316) during the expanding and depositing of the elastomeric member (102, 302, 402).

## Description

The present invention relates to an apparatus for depositing an elastomeric member in an expanded state on a holdout element and to a corresponding method.

When installing medium voltage (MV) joints and terminations, protective covering members have to be applied. Beside the wide spread heat shrink technology, it is also known to use elastomeric members, also called cold applied products. Usually, these elastomeric members are deposited on a so-called holdout in an expanded state and brought to the installation site on the holdout. For the final installation over a connection or component to be covered by the elastomeric member, the elastomeric member is pushed off the holdout and/or the holdout is deformed or destroyed to allow the elastomeric member to return into a less expanded state exerting radial pressure to the cable joint assembly. The mounting of the elastomeric members on the holdout is conventionally done by the manufacturer of the elastomeric members and the jointing companies usually buy elastomeric members assembled on a holdout. Bulky, energy-consuming machinery is used to expand and assemble the elastomeric members on the holdouts. To operate these machines, specific skills are required and the process has multiple steps requiring several manual interactions.

For instance, it is known to use the following basic technologies for expanding cold shrink products and depositing them on holdouts: Cone expansion with use of lubricant, finger expansion using moveable struts (or fingers) and a lubricant, needle expansion, and sock expansion using a supporting expansion cone.

The four expansion processes listed above are well known from the patent literature. For instance, JP 2001069632 A shows an example of a cone expansion device using a lubricant. CN 217362386 U discloses an example of finger expansion, and WO 02/07280 A1 or US 6049960 describe the principle of needle expansion. CN 205693264 U discloses an example of an expansion device using a textile sock and an expansion cone.

However, it is known that expanded elastomeric members have a limited shelf life in contrast to non-expanded elastomeric members. Consequently, it would be desirable to enhance the shelf life of the elastomeric members which are already delivered to a jointing company.

This object is solved by the subject matter of the independent claims. Advantageous embodiments are the subject matter of the dependent claims.

The present disclosure is based on the idea to provide a portable, field usable apparatus for depositing an elastomeric member in an expanded state on a holdout element. Thus, the elastomeric member can be stockpiled in a non-expanded state and is expanded only shortly before the final assembly on a joint or termination. The shelf life is significantly enhanced thereby.

In particular, by providing means for a field expansion of cold shrink MV joints and terminations, the present disclosure is aiming at expanding cold shrink products outside the factories of the elastomeric members' producers by their customers. This expansion can happen "in the field" like in the van of the cable jointer close to the installation site or e.g. at a depot where jointers receive the components they have to install.

In essence, it means that the expansion may happen either right before installation onto the cable, or in the morning before the jointer drives to the jointing locations or e.g. once a week, especially if the field expansion device is located at the depot. Once a field expansion would be implemented it offers opportunities to improve the sustainability and the overall cost situation. Any kind of holdout can be used with the techniques according to the present disclosure.

The frequency a field expansion device would be operated by cable jointers is a few times per day or per week or per quarter or, in the case it is located in a depot, it may be operated by more dedicated people who would run such device more regularly or even daily. Following general requirements can be listed for a field expansion device according to the present disclosure.

Only limited skills and experience should be needed to run the equipment. An easy to understand user interface (e.g. a display) can be provided. The device itself should be maintenance-free or at least require not much maintenance. Advantageously, the device is able to self-detect any need for maintenance and repair. Another important requirement is to reduce the number of interactions the jointer has to have with the machine during each cycle of expansion.

Further, there should be no need for lubrication. Proper work safety measures such as protective covers have to be provided. The expansion device should have low energy consumption, ideally it can be energized by batteries or by mains voltage supply (230 V /110 V). It is also desirable that the total weight of the device should be low (e. g. below 25 kg). The required space should be as small as possible and advantageously can be reduced when stored (the device may require more space for operation). Finally, the expansion device should have the capability to expand multiple sizes and/or types of cold shrink products.

The present disclosure provides an apparatus for depositing an elastomeric member in an expanded state on a holdout element, the apparatus comprising an expansion unit for radially expanding the elastomeric member, wherein the expansion unit is formed to receive the holdout element, so that the expanded elastomeric member can be deposited onto the holdout element. A textile friction reduction unit is provided, which is operable to be arranged at least partly between an outer surface of the expansion unit and an inner surface of the elastomeric member. In the following, the textile friction reduction unit is sometimes also referred to as a sock. According to the present disclosure, tensioning means are provided for axially tensioning the textile friction reduction unit during the expanding and depositing of the elastomeric member.

The axial tensioning of the textile friction reduction unit has the effect that the elastomeric member can be expanded and pushed off onto the holdout without using any grease or other lubricant. Thus, the apparatus can be used in the field with a much reduced risk of contamination. The continuous axial tensioning avoids any undesired creases, folds, or corrugations that would inhibit the smooth expanding and depositing process. Especially, the continuous axial tensioning avoids the textile being caught in the interface of elastomeric member and holdout. In other words, the function of the textile friction reduction unit can be described as a dry lubricant. It avoids the use of a grease or oil to reduce the coefficient of friction between elastomeric member and e.g. a cone. Besides the options of applying additional material to the sock, e.g. polytetrafluoroethylene (PTFE) spray, a lubricant can nevertheless be applied, too. Further options that are widely maintenance-free are to locate underneath the sock a further component such as a net-like object made preferably from thin fibers or to apply a film with a low coefficient of friction through e.g. PTFE coating.

The textile friction reduction unit may be fabricated from e.g. from polyethylene (PE) or polyester or any other friction reducing, tensile force withstanding material that can be weaved or braided, or otherwise manufactured from fiber-based materials, including fibers, yarns, filaments, threads, different fabric types, etc.

A particularly space saving and cost effective manner of achieving the axial tensioning of the textile friction reduction unit is to provide the textile friction reduction unit with a flexible tube shaped sleeve with a first end and a second end, wherein the tensioning means comprise means to connect the first end to the second end. Thus, the sock is kept under constant pull force by connecting it to itself, forming a loop around at least a part of the expansion unit e.g. a cone. This connection is either done by a number of special members, e.g. ropes or wires or by extensions of the textile itself. Through the connection of the sock to itself it can move backwards and forwards on the cone while always being straightened and without need for any other pulling device. Additional elements acting as springs may improve the ability of the assembly to stay under contact pull independent of stretch forces or the impact of humidity and temperature. The cone is for instance made hollow over its entire length to allow the ropes, wires or extensions of the textile to be guided through.

According to a further advantageous example, a clamping unit is provided for temporarily gripping the textile friction reduction unit. This clamping unit allows to move the textile friction reduction unit if need, but can be retracted when the space is required for slipping the elastomeric member over the end of the cylindrical section onto the holdout.

According to a further advantageous example, the textile friction reduction unit comprises a flexible tube shaped sleeve, wherein the tensioning means comprise a semi-rigid guide rod, the apparatus further comprising a spooling element for coiling up the flexible tube shaped sleeve and/or the semi-rigid guide rod during the depositing of the elastomeric member. The semi-rigid rod may be formed as a bendable elongated blade similar to the blade of a tape measure. The guide rod can transmit a limited amount of compressive force in a direction along the longitudinal axis of the blade. Moreover, in a retracted state, the guide rod is wound or coiled onto a reel. In general, the guide rod blade is an elongate strip of material (e.g., steel material) that has a concave or convex profile which improves standout and rigidity. As will generally be understood, the guide rod blade has the concave or convex profile when extended, but a generally flat profile and shape when wound around a reel being part of the spooling element. Using this spooling element, the required space of the apparatus can be reduced significantly, thereby allowing the expansion to be performed in the field.

According to a further advantageous example, the expansion unit comprises a hollow mandrel with a cylindrical section in which the holdout element can be accommodated at least partly. The mandrel firstly provides an effective means for keeping the expanded elastomeric member with sufficient radial force. Further, the elastomeric member can easily be pushed off the mandrel onto the holdout, if the holdout is at least partly arranged within the mandrel. Finally, the mandrel being hollow also allows the textile friction reduction unit being passed through the inside of the mandrel for maintaining the axial tension of the textile friction reduction unit.

The expansion unit may further comprise an axially moveable expansion cone. The expansion cone may for instance be attachable to a cylindrical section of the expansion unit and may be retractable through the cylindrical section. Thus, the holdout may be introduced into the cylindrical section for depositing the elastomeric member on the holdout. Further, the expansion unit may also comprise an axially moveable textile friction reduction unit which facilitates the expansion and depositing of the elastomeric member. The design variant of having a moveable textile friction reduction in contrast to a moveable expansion unit reduces the required space for operating the device significantly. This is why this solution is particularly advantageous for "in the field" expansion devices.

According to a further advantageous example, the expansion unit comprises a plurality of bendable guiding needles, wherein the textile friction reduction unit is operable to be arranged at least partly between parts of the guiding needles and the elastomeric member. These guiding needles are formed by a plurality of elongated, thin, flexible rib-like sliding tongues which are spaced apart about the circumference at a slight lateral distance therebetween, and upon which the expanding elastomeric member is slidingly fitted with a reduced applied force on the expansion unit. In order to lower the risk of damaging the inner surface of the elastomeric member when sliding it over the guiding needles, the guiding needles may have various modifications in their cross section. For instance, the cross section of the guiding needles may have rounded edges or can be rounded by being circular, semi-circular, elliptical, or the like.

In order to shorten the overall length of the apparatus and thus facilitating the field use, the expansion unit may comprise a plurality of hollow expansion tubes having different outer diameters, so that the hollow expansion tubes fit around each other and allow sequential expansion. This particular design also allows the use of the apparatus with a wide range of holdout diameters.

The present disclosure also relates to a method for depositing an elastomeric member in an expanded state on a holdout element, said method comprising the following steps:
providing an expansion unit with a textile friction reduction unit,
arranging the elastomeric member around a part of the textile friction reduction unit,
axially moving the expansion unit inside the elastomeric member for radially expanding the elastomeric member, so that a part of the textile friction reduction unit is arranged between an outer surface of the expansion unit and an inner surface of the elastomeric member,
inserting the holdout element into the expansion unit,
axially moving the elastomeric member with respect to the expansion unit, so that the expanded elastomeric member is deposited onto the holdout element,
wherein the textile friction reduction unit is axially tensioned during the expanding and depositing of the elastomeric member.

The above illustrated advantages apply for the method according to the present disclosure analogously.

According to an advantageous example, the expansion unit comprises an elongated hollow body and the tensioning of the textile friction reduction unit is performed by forming a loop around and through the expansion unit.

Further, the method may comprise the step of temporarily gripping the textile friction reduction unit by means of a clamping unit.

According to a further advantageous example, the textile friction reduction unit comprises a flexible tube shaped sleeve, wherein the tensioning means comprise a semi-rigid guide rod, the apparatus further comprising a spooling element, and wherein the flexible tube shaped sleeve and the semi-rigid guide rod are coiled up during the depositing of the elastomeric member for performing the axial tensioning.

According to a further advantageous example, the expansion unit comprises an elongated hollow body with a first end and a second end, wherein the elastomeric member is expanded by pushing the hollow body into the elastomeric member starting with the first end, and wherein the elastomeric member is deposited on the holdout element by pushing the elastomeric member off the hollow body over the second end. This particular design allows the use of an expansion cone on the first end, which does not have to be removed for the elastomeric member to be deposited on the holdout.

According to a further advantageous example, the step of expanding the elastomeric member comprises introducing into the elastomeric member a plurality of bendable guiding needles, which are attached to a fixation ring, so that the textile friction reduction unit is at least partly arranged between parts of the guiding needles and the elastomeric member.

The method may further comprise the step of axially moving a hollow expansion tube inside the plurality of guiding needles, so that the guiding needles and the elastomeric member are radially expanded.

According to a further advantageous example, the expansion unit comprises a plurality of hollow expansion tubes having different outer diameters, so that the hollow expansion tubes fit around each other, wherein the step of radially expanding the guiding needles and the elastomeric member is repeated using expansion tubes of increasing diameter.

When using the guide needles, the elastomeric member may be axially moved in a first direction with respect to the guiding needles for starting the expansion process and wherein the elastomeric member is axially moved in the opposite direction for being deposited onto the holdout element. With this arrangement, the elastomeric member is introduced into the apparatus on the same side as it is taken out again. Thus, only one side needs to be accessible for an operator, the remainder of the apparatus can be secured against accidental touch.

The advantages of the method according to the present disclosure are particularly valuable for an application in which the elastomeric member is a cold-shrink cable accessory. However, also other fields of application may benefit from the principles according to the present disclosure.

In particular, the present invention is usable for installing medium voltage (MV) joint bodies for 12 to 42 kV single-core and three-core cables, but may also be advantageous for covering other components and be used in other voltage classes. In particular, the present invention may be employed for installing cold shrink joint bodies and rejacketing sleeves as well as in principle all kinds of cold shrink sleeves such as terminations and cover sleeves as well as molded products like sheds, breakouts, boots and caps.

In the context of the present disclosure, the term high-voltage is intended to comprise the usual nominal voltage ranges of power transmission, namely medium voltage, MV, (about 3 kV to about 72 kV), high-voltage, HV, (about 72 kV to about 245 kV), and also extra high-voltage (up to presently about 500 kV). Of course, also higher voltages may be considered in the future. These voltages may be direct current (DC) or alternating current (AC) voltages. In the following, the term "high-voltage cable" is intended to signify a cable that is suitable for carrying electric current of more than about 1 A at a voltage above approximately 1 kV. Accordingly, the term "high-voltage accessory" is intended to signify a device that is suitable for interconnecting high-voltage facilities and/or high-voltage cables. In particular, a high-voltage accessory may either be an end termination or a cable joint.

The present invention is also applicable to the so-called "low-voltage", LV, range that relates to voltages below 1 kV. The principles of the present disclosure may further be applied to cold shrink products used for electronic applications, piping and construction applications and further more.

The expression "sleeve" according to the present invention is intended to signify straight tube shaped sleeves as well as differently shaped covers for branch joints, elbows, bends, breakouts, wrap-arounds, sheds, and the like. Moreover, the term "cold shrink sleeve" is intended to comprise such a product which is made for example from silicone rubber or ethylene-propylene-diene(monomer) rubber (EPDM) and can be modified, depending on the application, with fillers in order to effect e.g. a field control or to increase the leakage current resistance. In particular, these components can also be constructed of several elastic layers, e.g. layers having a different conductivity and/or dielectric constant, and are used for assembling cable fittings, i.e. for providing an insulation at the ends of a cable in conjunction with cable terminations, cable plugs, as cable end caps, or as cable sleeves for insulation at the point of connection between two cable ends, and thus form part of a cable fitting set.

The term "holdout" is intended to signify a support device, such as a helical support, a single-part support, or multi-part support which keeps the cold shrink member in an expanded state until it is arranged at the location of its final assembly. The sleeve-shaped cold shrink member is placed, before assembly, on such a relatively rigid or slightly plastically deformable cylindrical support device which is then pushed together with the sleeve-shaped cold shrink member on the cable prepared for assembly, at formation of a radial spacing therebetween. The holdout is removed after the cold shrink member is in place.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present disclosure. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1 to 5**: are a schematic representation of the steps for assembling a cold shrink member on a holdout using an apparatus according to a first example;
- **FIG. 6 to 8**: are a schematic representation of the steps for assembling a cold shrink member on a holdout using an apparatus according to a second example;
- **FIG. 9 to 12**: are a schematic representation of the steps for assembling a cold shrink member on a holdout using an apparatus according to a further example;
- **FIG. 13 to 15**: are a schematic representation of the steps for assembling a cold shrink member on a holdout using an apparatus according to a further example;
- **FIG. 16 to 19**: are a schematic representation of different cross-sections of needles;
- **FIG. 20**: is a schematic illustration of a further example of an expansion cone tip;
- **FIG. 21**: is a schematic illustration of an advantageous example of an expansion cone tip;
- **FIG. 22**: is a schematic illustration of a further example of an expansion cone tip.

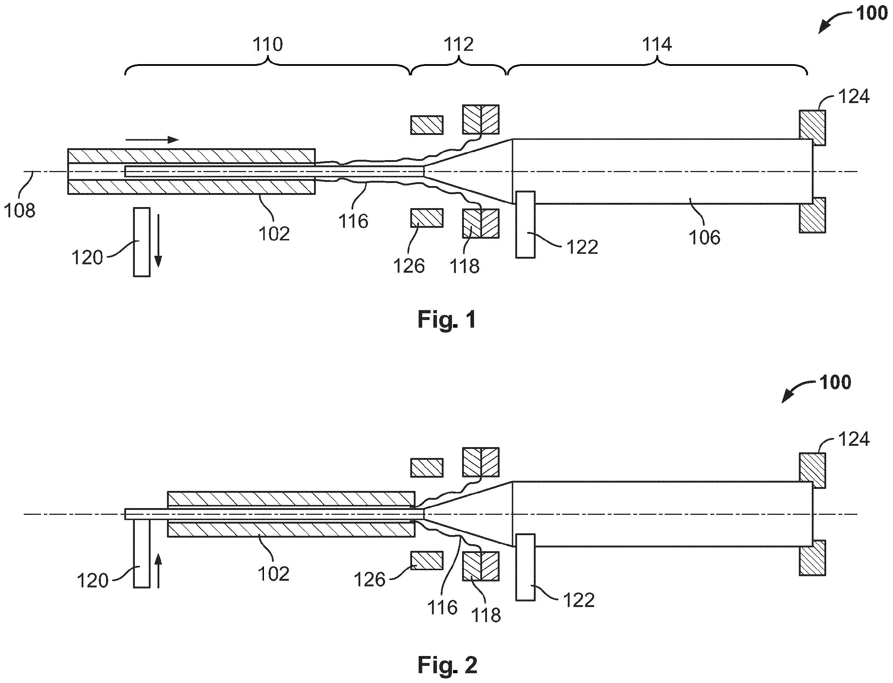

The present invention will now be explained in more detail with reference to the Figures and firstly referring to Fig. 1 to 5.

Figures 1 to 5 illustrate schematically an apparatus 100 for depositing an elastomeric member 102 in an expanded state on a holdout element 104. The apparatus 100 comprises an expansion unit 106 for expanding the elastomeric member 102. The elastomeric member 102 in the described example comprises a sleeve fabricated from a silicone rubber or ethylene-propylene-diene(monomer) rubber (EPDM).

The expansion unit 106 is hollow and comprises three distinct sections, which follow each other along the longitudinal axis 108. In an insertion section 110, the diameter of the expansion unit 106 is small enough to allow an easy assembly of the elastomeric member 102 in a non-expanded or minorly expanded state.

In a cone section 112 the diameter of the expansion unit 106 increases, until it reaches the final outer diameter of the cylindrical section 114.

For expanding the elastomeric member 102, the expansion unit 106 and the elastomeric member 102 are moved with respect to each other, so that the elastomeric member 102 glides from the insertion section 110 over the cone section 112 to be finally parked in the cylindrical section 114. According to the present disclosure, a textile friction reduction unit 116 is at least partly arranged radially between the expansion unit 106 and the elastomeric member 102. Thereby the friction for pushing the elastomeric member 102 over the expansion unit 106 is significantly reduced. More importantly for many applications, there is no relative move of the elastomeric member on the expansion unit, but only relative to the textile which happens mostly in circumferential direction when the textile of the friction reduction unit unfolds in order to adjust to the radial dimensions of expansion unit.

In the embodiment shown in Figures 1 to 5, the textile friction reduction unit 116 is a polyethylene or polyester woven tube shaped sleeve, containing optionally fibers of further polymeric, metallic, or ceramic materials. The textile friction reduction unit 116 extends from a clamp ring 118 through the elastomeric member 102 along the insertion section 110 and into the hollow expansion unit 106, when the elastomeric member 102 is mounted on the insertion section 110 (see Figure 1).

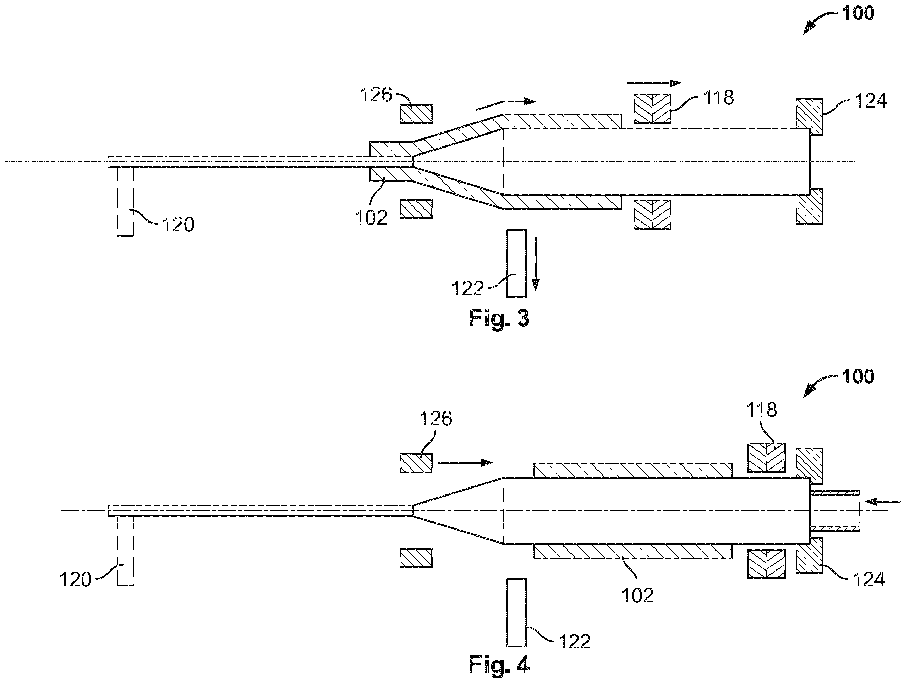

As can be seen in Figure 2, in a next step, a first support means 120 is attached to an end region of the insertion section 110, after the elastomeric member 102 has been pushed onto the insertion section 110. Now the expansion unit 106 is supported by the first support means 120 and a third support means 124, so that a second support means 122, which is arranged in the cylindrical section 114 close to the cone section 112, can be opened. The elastomeric member 102 may therefore pass over the cone section 112 into the cylindrical section 114 (see Figure 4).

When moving the elastomeric member 102 onto the cylindrical section 114 of the expansion unit 106, the clamp ring 118 holding the textile friction reduction unit 116 is moved along the longitudinal axis 108 of the apparatus 100.

Thus, the textile friction reduction unit 116 always remains tensioned in an axial direction, avoiding any crinkles or folds.

Figure 4 shows the state in which the elastomeric member 102 is parked on the cylindrical section 114 of the expansion unit 106.

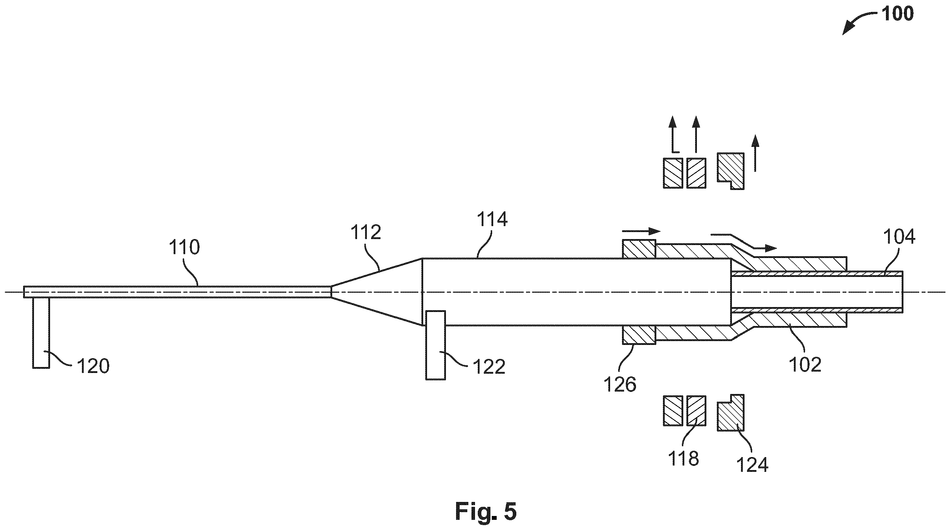

Figure 5 illustrates the step in which the elastomeric member 102 is deposited on the holdout 104. To this end, firstly the third support means 124 are released from the cylindrical section 114, whereas the second support means 122 is attached to the expansion unit 106 again. A push ring 126 is moved axially to push the elastomeric member 102 over the peripheral region of the cylindrical section 114. The third support means 124 is retracted and the clamp ring 118 is retracted and opened, so that the elastomeric member 102 can be pushed onto the holdout 104.

By releasing the textile friction reduction unit 116 from the clamping of the clamp ring 118, the textile friction reduction unit 116 is allowed to move into the hollow expansion unit 106. Consequently, the elastomeric member 102 is directly and safely deposited on the holdout 104.

In order to hold the textile friction reduction unit 116 under constant pull force so that no wrinkles may occur and it cannot be caught in the interface between elastomeric member and holdout, the textile friction reduction unit 116 forms a loop around the expansion unit through the connection of the textile friction reduction unit 116 to itself. It can move backwards and forwards on the expansion unit 106 while always being straightened and without the need for any other pulling device. The function of the textile friction reduction unit 116 (also called sock) may therefore be described as a dry lubricant. It avoids the use of a grease or oil to reduce the coefficient of friction between the elastomeric member 102 and the expansion unit 106.

Besides the options of applying additional material to the sock or the expansion unit, e.g. PTFE spray, nevertheless a lubricant can be applied as well. Further options that are widely maintenance-free are to locate underneath the sock a further component, such as a net-like object made preferably from thin fibers, or to apply a film with a low coefficient of friction through e.g. PTFE coating.

In summary, the general steps of the expansion process of a cone expander according to Figures 1 to 5 of the present disclosure start with parking the elastomeric member 102 to be expanded on the textile material. Then the elastomeric member 102 gets expanded by moving it over the conical part 112 of the expansion mandrel onto the cylindrical section 114. Finally, the elastomeric member 102 is axially moved beyond the end of the cylindrical section 114 to be released on the holdout, which is located inside the cylindrical section and extending a little outside. Especially if the elastomeric member 102 has a small internal diameter, the front end of the expansion cone needs to have a very small diameter to allow the elastomeric member 102 to fit over the textile friction reduction unit 116 with the cone inside.

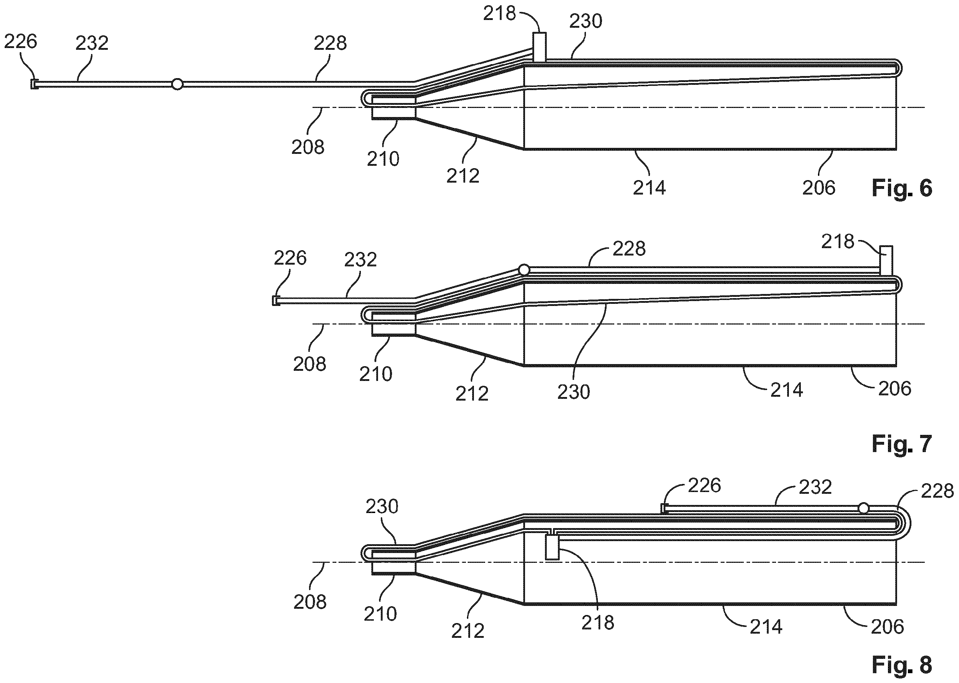

In at least some cases, it may be beneficial to provide an expansion unit 106 without an elongated insertion section 110. This particular example will now be described with reference to Figures 6 to 8.

In Figures 6 to 8, only an expansion unit 206 and a textile friction reduction unit 216 are depicted. Further, of the textile friction reduction unit 216, only the upper half is shown, the lower half is of course the mirror image thereof, the textile friction reduction unit 216 comprising a tube shaped textile sleeve 228.

In contrast to the example of Figures 1 to 5, the expansion unit 206 has a much shorter insertion section 210 compared to the example of Figures 1 to 5. In Figures 6 to 7, the friction reduction unit 216 is only partly made from a textile material. In particular, a tube-shaped textile sleeve 228 is provided, which is connected to a rope or wire as means 230 for forming a loop around the expansion unit 206. This rope or wire 230 forms a connecting means for forming a tensioning loop around the expansion unit 206.

The means for forming a loop 230 are attached to the tube-shaped textile sleeve 228 by means of a clamp ring 218. Furthermore, a slide-on aid 232 is attached to the end of the tube shaped textile sleeve 228, which is opposite to the end that is connected with the clamp ring 218. The slide-on aid 232 may end in a push ring 226, which facilitates pushing the elastomeric member 102 onto the expansion unit 206.

When an elastomeric member (not shown in Figures 6 to 8) is to be expanded by the expansion unit 206, the elastomeric member is first slid over the slide-on aid 232 and the textile sleeve 228 and then pushed over the cone section 212. Next, the tube shaped textile sleeve 228 is moved away from the cone section 212 onto the cylindrical section 214, so that the elastomeric member is fully expanded. This scenario is shown in Figure 7.

When pushing off the elastomeric member onto a holdout, which is stored inside the cylindrical section 214, the tube shaped textile sleeve 228 is further pushed away from the cone section 212, so that the clamp ring enters the inner volume of the expansion unit 206. The loop forming means 230 meanwhile keeps the textile sleeve 228 axially tensioned and crinkle-free.

It should be mentioned that the means for forming a loop 230 and the slide-on aid 323 may, of course, also be formed from the same material as the tube-shaped textile sleeve 228.

Figure 8 shows the state of the expansion unit 206 and the textile friction reduction unit 216 in a state after the holdout together with the elastomeric member have been removed again. For returning to a starting position again, the push ring 226 is moved back into the position shown in Figure 6 and the process can start all over again.

The expansion forces and the movement of the elastomeric member can be applied in different ways. Examples are pulling the sock, pushing the elastomeric member (e.g. iris type of ring elements; allow to push in cylindrical and in conical section), using a pneumatic valve or any other external clamping device (e.g. mechanical press elements, elastomeric half shells, etc.), or a combination of these techniques.

When following the option of applying the necessary forces by pulling the sock, it was found that the pull forces to be applied onto the sock a very high and some textiles might tear. Trials with having the sock in double layer arrangements for a section close to the clamping flange required circumferential sewing seams. These were found to be weakening the textile initiating splits in this region. This lead to the conclusion to use robust textiles, e.g. polyester, have a smooth transitions at the clamping flange and/or to use mechanical support for the axial forces by pushing the elastomeric member or using external clamping devices.

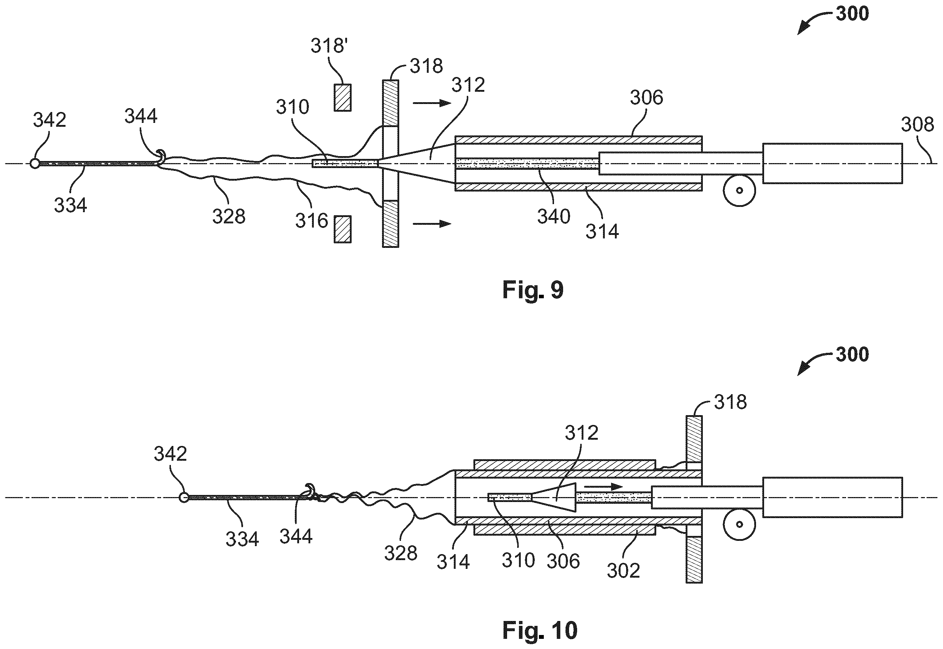

The principles according to the present disclosure may be realized in a further advantageous manner. Figures 9 to 12 show a further advantageous example of an apparatus 300 for depositing an elastomeric member 302 according to the present disclosure.

The apparatus 300 comprises an expansion unit 306 with an insertion section 310, a cone section 312, and a cylindrical section 314, which are arranged along a longitudinal axis 308. As shown in Figure 9, a textile friction reduction unit 316 is positioned to cover the insertion section 310 and is held under tension by means of a guide rod 334. The elastomeric member 302 is then slid over the guide rod 334, the textile friction reduction unit 316, and is expanded by passing over the cone section 312, until the elastomeric member 302 is parked on the cylindrical section 314 of the expansion unit 306 as shown in Figure 10.

The textile friction reduction unit 316 comprises a textile sleeve 328, which is connected to a holding element, e.g. a clamp ring 318. As schematically illustrated in Figure 9, different sizes of rings 318, 318' can be used to adapt for different sizes of expansion units 306.

However, the sleeve 328 is not necessarily completely tube shaped. It can also be just one or more textile stripes. The reason for this design option is that the textile of the friction reduction unit 316 comprises two zones: One zone needs to be tubular as the elastomeric member 302 is located there. This first zone has extensions of about equal length which can be tubular or just at least one stripe. The extensions form a second zone ("zone 2"). The end of these stripes are attached to the guide rod 334. The guide rod 334 has a length corresponding to the length of the cylindrical portion 314 of the expansion cone.

With the guide rod 334 the extensions of the textile (also called stripes; forming zone 2) are being pushed through the cylindrical tube to connect with the spooling element 336. Both components, namely the guide rod 334 and the extensions of the textile, are spooled by means of the spooling element 336.

As illustrated in Figure 10, the cone section 312 and the insertion section 310 are axially movable and may be retracted through the inner volume of the cylindrical section 314. This may, for instance, be done by an electromotor.

By retracting the cone section 312 and the insertion section 310, the end of the cylindrical section 314, onto which the elastomeric member 302 has been pushed first, is now open. Consequently, in contrast to the previously described examples of the present disclosure, the holdout 304 will be inserted into the cylindrical section 314 in the same direction as the elastomeric member 302 has been pushed onto the cylindrical section 314.

For being deposited on the holdout 304, the elastomeric member 302 is pushed back into the direction from which it came.

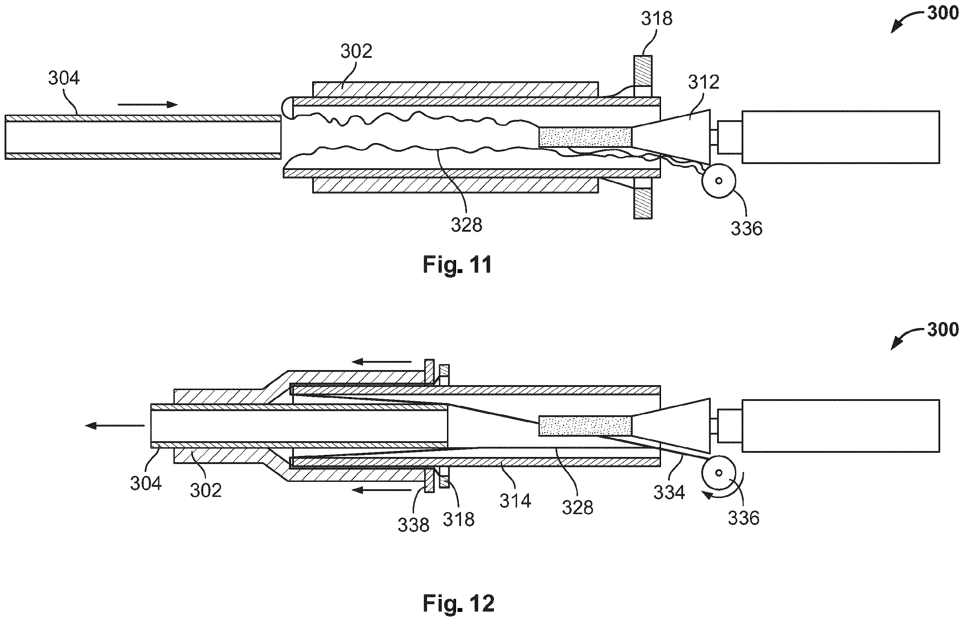

As can be seen from Figure 11, the guide rod 334, which was used to pull straight the textile friction reduction unit 316 in Figure 9, is subsequently used to push the textile friction reduction unit 316 into the inner volume of the cylindrical section 314. Because the cone section 312 and the insertion section 310 have been removed from the inner volume of the cylindrical section, there is space for the textile friction reduction unit 316 and the holdout 304 (not shown).

Advantageously, the guide rod 334 may have a semi-rigid characteristic so that it can be coiled on a spooling element 336 (see Figures 11 and 12). By coiling up the semi-rigid guide rod 334, the textile friction reduction unit 316 can be axially tensioned while using only minimal space. For being able to transmit axial traction and pressure, while still being able to be coiled up, the guide rod 334 may be formed as a bendable elongated blade similar to the blade of a tape measure. The guide rod 334 can transmit a limited amount of compressive force in a direction along the longitudinal axis of the blade. Moreover, in a retracted state, the guide rod 334 is wound or coiled onto a reel, referred to as a spooling element 336.

In general, the guide rod blade is an elongate strip of material (e.g., steel material) that has a concave or convex profile which improves standout and rigidity. As will generally be understood, the guide rod blade has the concave or convex profile when extended, but a generally flat profile and shape when wound around a reel being part of the spooling element. Using this spooling element 336, the required space of the apparatus can be reduced significantly, thereby allowing the expansion to be performed in the field.

For positioning the elastomeric member on the holdout 304, the elastomeric member 302 is pushed off axially from the cylindrical section 314 and the holdout 304 is at the same time moved out of the inner volume of the cylindrical section 314.

The textile friction reduction unit 316 is kept under pulling force by spooling up the semi-rigid guide rod 334 and optionally also parts of the textile material on the spooling element 336. For exerting the necessary force for pushing the elastomeric member 302, either an additional pushing element 338 or the clamp ring 318 can be used.

Furthermore, in order to further reduce the space required in an axial direction, the retractable cone section 312 may be axially moved by means of an optionally telescopic drive shaft 340. Moreover, the guide rod 334 may also be coiled up on a second spooling element (or reel) 342. The second spooling element is arranged on the side of the apparatus 300 from which the elastomeric member 301 is introduced onto the expansion unit 306. Consequently, for sliding the elastomeric member 302 over the textile friction reduction unit 316, a connection between the textile friction reduction unit 316 and the guide rod 334 (e.g. a hook 344) has to be released and closed after the elastomeric member 302 is mounted around the textile friction reduction unit 316.

It should be noted that the Figures are only schematic and in particular not to scale. For instance, in advantageous implementations of the apparatus 300, the sleeve (or textile stripes) 328 has approximately twice the length of the guide rod 334 and the length of the cylindrical portion 314 of the expansion cone.

For allowing the expansion to a multitude of diameters of the elastomeric member 302, also a plurality of cylindrical sections 314 may be provided, the cylindrical sections 314 having different diameters, so that they fit around each other.

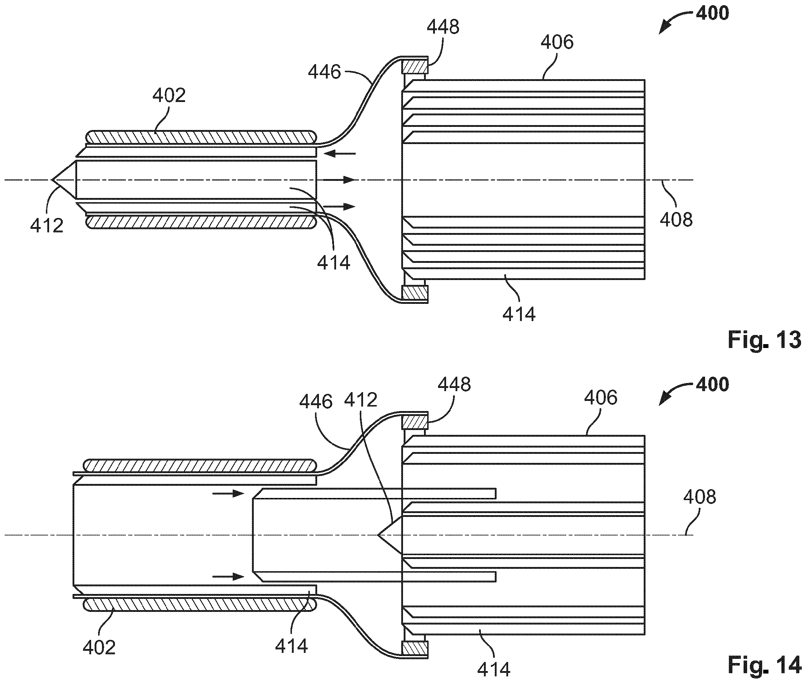

The principles according to the present disclosure may be realized in a further advantageous manner. In Figures 13 to 19 a further advantageous example according to the present disclosure is shown. Essentially, the apparatus 400 for depositing an elastomeric member according to this example uses a combination of a needle expansion with a tensioned textile friction reduction unit as described with reference to the previous Figures.

The known needle expansion process of e.g. US 6049960 has two major draw backs for use with MV joint bodies as elastomeric members: First, in the expanded condition the needles leave a lot of circumferential space between them. Here the joint body could touch the supporting expansion unit tube underneath or the tube needs to have according cut-outs. In any case, this results in a higher expansion ratio compared to the cone expansion combined with a sock. The second drawback is the removal process of the needles. With current needle expanders the needles are pulled out from the interface between the supporting tube and the joint body after the expansion process. This happens e.g. by pulling pairs of needles.

The high friction forces between needles and elastomeric member easily damage the inner walls of the elastomeric member by cutting or slitting, or this leads to relocation of abraded (conductive) material. An intense lubrication of the needles may reduce this risk, but it does not eliminate it.

An aspect of the present disclosure is to enhance the needle expansion process especially for field expansion by using a textile friction reduction unit (sock) at the interface between needles 446 and the elastomeric part 402. As shown in Fig. 13 to 15, the needles 446 are attached to a fixing ring 448, which encompasses the cylindrical section 414 of the expansion unit 406. Optionally, instead of only one cone section and one cylindrical section 414 it may comprise a plurality of tubes with different diameters, which fit around each other. As shown in Figures 13 and 14, starting from a mandrel with a cone section 412, increasingly larger tubes are inserted under the needles 446 to gradually expand the elastomeric member 402 to the desired expanded diameter.

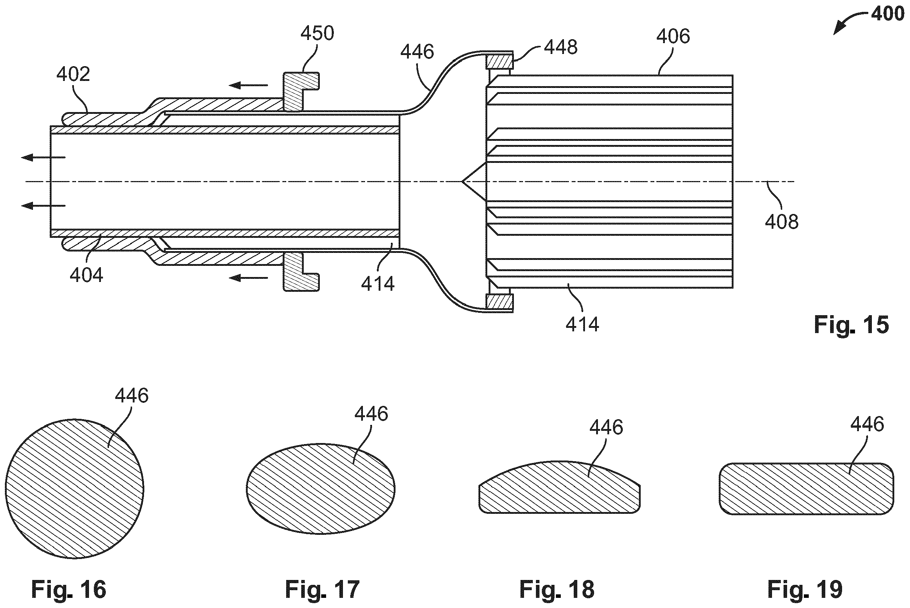

When after expansion the elastomeric member 402 is to be relocated from the needles 446 onto the holdout 404, the elastomeric member 402 is pushed off the needles 446 by a stripping device 450 (e.g. a ring element as shown in Fig. 15). To lower the friction forces the textile material (not shown in Figures 13 to 15) may be combined with meshes, films or the like located underneath them.

Before stripping the joint body, the holdout 404 is placed inside the hollow supporting tube of the cylindrical section 414. Comparable to the modified cone expansion process as described above, the textile friction reduction unit is being pulled into the supporting tube while being stretched constantly. To achieve this, the textile friction reduction unit may be actively pulled e.g. by a winch device functioning as a spooling element as explained above with reference to Figures 11 and 12. Forming a loop of the textile friction reduction unit is due to fundamental design facts more challenging with the needle expansion. The reason is that the loop runs through the set of expansion tubes resulting in the length of the loop being different depending on the expansion ratio.

An important aspect underlying the present disclosure is to reduce the size of space needed for the needle expansion device and reduce the power required to run the process in order to reduce weight of the device. Therefore, the conical section 412 of the expansion unit 406 is transformed into a multitude of conical rings which are made part of the front faces of a multitude of concentric tubes. The expansion is done in steps by pushing one tube after the other into the interface between needles 446 with the elastomeric member 402 (sitting on the textile friction reduction unit) and the expansion tube inserted before. Each time a larger diameter tube is inserted, so that the tube inserted before can be pulled back (see Fig. 13 to 15). The degree of expansion done by each step may correspond directly to the wall thickness of the tubes plus the radial spacing between them, or the tubes have short additional conical expansion means at their front end which could be removed if this is the last expansion step (see e.g. WO 02/07280 A1).

Corresponding to the size and number of tubes inserted, the expansion ratio of the elastomeric member 402 can be chosen within given limits. For instance, holdouts 404 for cold shrink MV joints may have outer diameters ranging between 54 mm and 90 mm. According to an advantageous example, a set of preferably metallic tubes out of hard aluminum or steel can be provided with internal diameters starting from a full material shaft to allow for minimal outer diameter in the range of 15 to 20 mm and up to 95 mm internal diameter. This is to allow insertion of holdouts with outer diameters of 90 mm still leaving sufficient space for the textile friction reduction unit to be pulled-in.

Moreover, to mitigate the above explained issue of the needles damaging the inside of the textile sleeve and/or of the elastomeric member, the needles may have various cross sections ranging from circular, oval, flat and arched to completely flat as shown in Figures 16 to 19. The material can be steel, aluminum or polymeric materials like PA or PP. The material combination of expansion tubes and needles needs to be chosen of avoid the need for lubrication. To reduce the overall weight of the expansion device the tubes may be made from hard aluminum and the needles may be made from PP or PA.

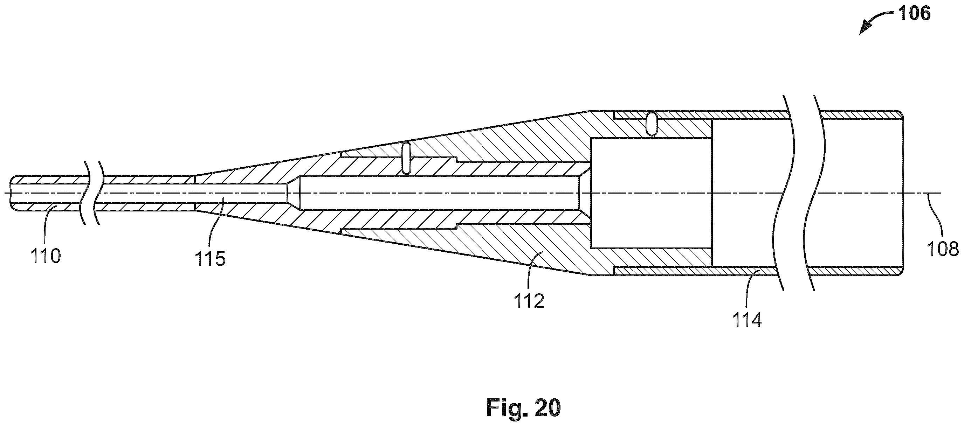

Figures 20 to 22 illustrate examples of how the expansion unit and in particular the cone section may be formed to be used in any of the above explained examples.

Figure 20 show a schematic cross-sectional view of an expansion unit 106 that can be used in particular with the apparatus 100 of Figures 1 to 5. The expansion unit 106 according to this example is formed by three form fitting elements and comprises an elongated slender insertion section 110, a tapered cone section 112, and a hollow cylindrical section 114. Through the complete expansion unit 106 an open channel 115 extends along the longitudinal axis 108. The channel 115 allows ropes, wires or extensions of the textile friction reduction unit to be guided through.

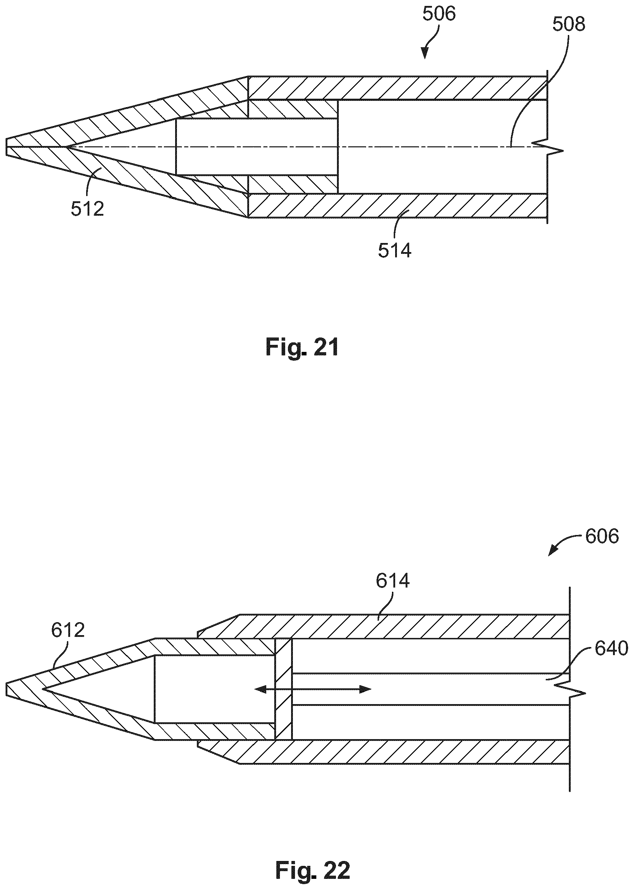

Figure 21 schematically depicts an expansion unit 506 where the cone section 512 is pluggable onto the cylindrical section 514. Thus, the cone section 512 can be removed after the elastomeric member has been parked on the cylindrical section 514. This expansion unit may for instance be used with the apparatus 300 of Fig. 9.

More advantageously, an expansion unit 600 (see Fig. 22) comprises a cone section 612 which is retractable into the cylindrical section 614. This avoids the effort of the operator to remove the cone and store it, which is an interaction with process that needs to happen in a timely fashion and bears the risk of damage and contamination of the cone. A shaft 640 supports and moves the retractable cone section 612. The expansion unit 606 of Fig. 22 is particularly useful for the apparatus 300 illustrated in Figures 9 to 12.

In summary, the apparatus and method for depositing an elastomeric member in an expanded state on a holdout element according to the present disclosure allows performing the expanding operation by installing costumers, e.g. in the field or in their depots. Advantageously, the size of the apparatus is minimized, especially the length as delivered and the length and space required during operation. The apparatus according to the present disclosure is easy to operate, needs a low number of handling steps compared to commercially available expansion machines, has a low risk of errors, and allows to quickly change the product size. Moreover, the device is low weight and low cost.

### REFERENCE NUMERALS

| **Reference Numeral** | **Description** |
|---|---|
| 100, 300, 400 | Apparatus for depositing an elastomeric member |
| 102, 302, 402 | elastomeric member |
| 104, 304, 404 | holdout |
| 106, 206, 306, 406, 506, 606 | expansion unit |
| 108, 208, 308, 408, 508 | longitudinal axis |
| 110, 210, 310 | insertion section |
| 112, 212, 312, 412, 512, 612 | cone section |
| 114, 214, 314, 414, 514, 614 | cylindrical section |
| 115 | channel |
| 116, 216, 316 | textile friction reduction unit |
| 118, 218, 318 | clamp ring |
| 120 | first support means |
| 122 | second support means |
| 124 | third support means |
| 126, 226 | push ring |
| 228, 328 | tube shaped textile sleeve |
| 230 | rope or wire; means for forming a loop |
| 232 | slide-on aid |
| 334 | semi-rigid guide rod |
| 336 | spooling element |
| 338 | stripping element |
| 340 | drive shaft |
| 342 | second spooling element |
| 344 | connection, hook |
| 446 | bendable guiding needles |
| 448 | fixation ring |
| 450 | stripping device |

## Claims

1. Apparatus for depositing an elastomeric member (102, 302, 402) in an expanded state on a holdout element (104, 304, 404), the apparatus (100, 300, 400) comprising:
an expansion unit (106, 206, 306, 406, 506, 606) for radially expanding the elastomeric member (102, 302, 402), wherein the expansion unit (106, 206, 306, 406, 506, 606) is formed to receive the holdout element (104, 304, 404), so that the expanded elastomeric member (102, 302, 402) can be deposited onto the holdout element (104, 304, 404),
a textile friction reduction unit (116, 216, 316), which is operable to be arranged at least partly between an outer surface of the expansion unit (106, 206, 306, 406, 506, 606) and an inner surface of the elastomeric member (102, 302, 402),
wherein tensioning means are provided for axially tensioning the textile friction reduction unit (116, 216, 316) during the expanding and depositing of the elastomeric member (102, 302, 402).

2. Apparatus according to claim 1, wherein the textile friction reduction unit (116, 216, 316) comprises a flexible tube shaped sleeve (228, 328) with a first end and a second end, and wherein the tensioning means comprise means to connect the first end to the second end.

3. Apparatus according to claim 1 or 2, further comprising a clamping unit (118, 218, 318) for at least temporarily gripping the textile friction reduction unit (116, 216, 316).

4. Apparatus according to claim 1, wherein the textile friction reduction unit (316) comprises a flexible tube shaped sleeve (328), and wherein the tensioning means comprise a semi-rigid guide rod (334), the apparatus further comprising a spooling element (336) for coiling up the flexible tube shaped sleeve (328) and/or the semi-rigid guide rod (334) during the depositing of the elastomeric member (302).

5. Apparatus according to one of the preceding claims, wherein the expansion unit (106, 206, 306, 406, 506, 606) comprises a hollow mandrel with a cylindrical section (114, 214, 314, 414, 514, 614) in which the holdout element (104, 304, 404) can be accommodated at least partly.

6. Apparatus according to one of the preceding claims, wherein the expansion unit (306, 606) comprises an axially moveable expansion cone (312, 612) and/or wherein the textile friction reduction unit (116, 216, 316) is axially moveable.

7. Apparatus according to one of the preceding claims, wherein the expansion unit (406) comprises a plurality of bendable guiding needles (446), wherein the textile friction reduction unit is operable to be arranged at least partly between parts of the guiding needles (446) and the elastomeric member (402).

8. Apparatus according to one of the preceding claims, wherein the expansion unit (406) comprises a plurality of hollow expansion tubes (414) having different outer diameters, so that the hollow expansion tubes fit (414) around each other and allow sequential expansion of the elastomeric member (402).

9. Method for depositing an elastomeric member (102, 302, 402) in an expanded state on a holdout element (104, 304, 404), said method comprising the following steps:
providing an expansion unit (106, 206, 306, 406, 506, 606) with a textile friction reduction unit (116, 216, 316),
arranging the elastomeric member (102, 302, 402) around a part of the textile friction reduction unit (116, 216, 316),
axially moving the expansion unit (106, 206, 306, 406, 506, 606) inside the elastomeric member (102, 302, 402) for radially expanding the elastomeric member (102, 302, 402), so that a part of the textile friction reduction unit (116, 216, 316) is arranged between an outer surface of the expansion unit (106, 206, 306, 406, 506, 606) and an inner surface of the elastomeric member (102, 302, 402),
inserting the holdout element (104, 304, 404) into the expansion unit (106, 206, 306, 406, 506, 606),
axially moving the elastomeric member (102, 302, 402) with respect to the expansion unit (106, 206, 306, 406, 506, 606), so that the expanded elastomeric member (102, 302, 402) is deposited onto the holdout element (104, 304, 404),
wherein the textile friction reduction unit (116, 216, 316) is axially tensioned during the expanding and depositing of the elastomeric member (102, 302, 402).

10. Method according to claim 9, wherein the expansion unit (106, 206, 306, 406, 506, 606) comprises an elongated hollow body and the tensioning of the textile friction reduction unit is performed by forming a loop around the expansion unit (106, 206, 306, 406, 506, 606).

11. Method according to claim 9 or 10, further comprising the step of temporarily gripping the textile friction reduction unit (116, 216, 316) by means of a clamping unit (118, 218, 318).

12. Method according to claim 9, wherein the textile friction reduction unit (316) comprises a flexible tube shaped sleeve (328), and wherein the tensioning means comprise a semi-rigid guide rod (334), the apparatus further comprising a spooling element (336), and wherein the flexible tube shaped sleeve (328) and/or the semi-rigid guide rod (334) are coiled up at least partly during the depositing of the elastomeric member (302) for performing the axial tensioning.

13. Method according to one of the claims 9 to 12, wherein the expansion unit (106, 206) comprises an elongated hollow body with a first end and a second end, and wherein the elastomeric member (102) is expanded by pushing the hollow body into the elastomeric member (102) starting with the first end, and wherein the elastomeric member (102) is deposited on the holdout element (104) by pushing the elastomeric member (102) off the hollow body over the second end.

14. Method according to one of the claims 9 to 12, wherein the step of expanding the elastomeric member (402) comprises introducing into the elastomeric member (402) a plurality of bendable guiding needles (446), which are attached to a fixation ring (448), so that the textile friction reduction unit is at least partly arranged between parts of the guiding needles (446) and the elastomeric member (402).

15. Method according to claim 14, further comprising the step of axially moving at least one hollow expansion tube (414) inside the plurality of guiding needles (446), so that the guiding needles (446) and the elastomeric member (402) are radially expanded.

16. Method according to claim 15, wherein the expansion unit comprises a plurality of hollow expansion tubes (414) having different outer diameters, so that the hollow expansion tubes fit around each other, and wherein the step of radially expanding the guiding needles (446) and the elastomeric member (402) is repeated using expansion tubes (414) of increasing diameter.

17. Method according to one of the claims 14 to 16, wherein the elastomeric member (402) is axially moved in a first direction with respect to the guiding needles (446) for starting the expansion process and wherein the elastomeric member (402) is axially moved in the opposite direction for being deposited onto the holdout element (404).

18. Method according to one of the claims 9 to 17, wherein the elastomeric member (102, 302, 402) is a cold-shrink cable accessory.
